# EUROPÄISCHE PATENTSCHRIFT

(11) **EP 1 013 954 B1**
(45) Veröffentlichungstag und Bekanntmachung des Hinweises auf die Patenterteilung: **12.06.2002**
(21) Anmeldenummer: 99123464.2
(22) Anmeldetag: 22.11.1999
(51) Int. Cl.: F16D 33/10, F16D 33/08

(54) **Hydrodynamische Kupplung**
Hydrodynamic coupling
Accouplement hydrodynamique

(30) Priorität: 22.12.1998 DE 19859428
(43) Veröffentlichungstag der Anmeldung: 28.06.2000
(73) Patentinhaber: Voith Turbo GmbH & Co. KG, 89522 Heidenheim (DE)
(72) Erfinder: Hoffeld, Harald, 74564 Crailsheim (DE)
(74) Vertreter: Dr. Weitzel & Partner

(56) Entgegenhaltungen:
- DD-A- 270 744
- DE-B- 1 202 592
- US-A- 4 761 952
- US-A- 5 251 441

## Beschreibung

Die Erfindung betrifft eine hydrodynamische Kupplung mit den Merkmalen des Oberbegriffes von Anspruch 1.

Eine solche Kupplung dient zur Kraftübertragung von einem Antriebsmotor zu einer Arbeitsmaschine. Vorzugsweise handelt es sich um Arbeitsmaschinen, die eine große Masse aufweisen oder die große Massen fördern, z.B. Förderbänder. Mit der hydrodynamischen Kupplung wird erreicht, daß der Antriebsmotor unter nur geringer Last anlaufen kann. Erst während der Antriebsmotor seine Nenndrehzahl erreicht - oder sogar erst nachdem er diese erreicht hat wird die Arbeitsmaschine in Bewegung gesetzt. Während des Anlaufvorganges der Arbeitsmaschine begrenzt die hydrodynamische Kupplung das durch sie übertragene Drehmoment selbsttätig auf einen bestimmten Wert, so daß der Antriebsmotor und die Arbeitsmaschine geschont werden. Die Erfindung betrifft ausschließlich hydrodynamische Kupplungen derjenigen Bauart, welche mit einer gleichbleibenden Menge an Arbeitsflüssigkeit betrieben werden. D.h. im Stillstand der Kupplung wird ihr Innenraum mit einer bestimmten Arbeitsflüssigkeitsmenge gefüllt, die während des Betriebes unverändert bleibt. Jedoch hat die Kupplung außer dem beschaufelten Arbeitsraum wenigstens eine mit dem Primärrad rotierende Verzögerungskammer. In dieser sammelt sich insbesondere beim Stillstand der Kupplung ein Teil der Arbeitslüssigkeit. Durch diese Konstruktion wird erreicht, daß der beschaufelte Arbeitsraum zu Beginn des Anfahrvorganges nur teilweise mit Arbeitsflüssigkeit gefüllt ist und daß der Füllungsgrad im Arbeitsrum nur allmählich den höchstmöglichen Wert annimmt. Man könnte sagen, es handelt sich um ein e Kupplung mit innerer Beeinflussung des Arbeitsraum-Füllungsgrades. Daneben gibt es hydrodynamische Kupplungen mit äußerer Beeinflussung des Arbeitsraum-Füllungsgrades, z.B. mit Hilfe eines Schöpfrohres. Kupplungen dieser Art können ähnliche Eigenschaften aufweisen. Der zusätzliche Aufwand für die Einrichtung zur äußeren Beeinflussung lohnt sich jedoch meistens nur im Falle sehr hoher Leistungsdichte.

### Stand der Technik

(1) DE-AS 12 02 592
(2) DE-PS 32 31 368
(3) DE-PS 32 40 334
(4) DE-PS 33 29 854
(5) DE-PS 35 22 174

Die aus der Druckschrift (1) bekannte hydrodynamische Kupplung hat zwei Verzögerunskammern, die - zwecks symmetrischer Ausbildung der Kupplung - an denRückseiten der beiden Schaufelräder angeordnet sind. Die beiden Verzögerungskammern befinden sich überwiegend in verhältnismäßig geringem Abstand von der Kupplungsdrehachse. Etwa im radial mittleren Bereich des Arbeitsraumes sind in beiden Schaufelrädern Überströmkanäle vorgesehen, welche die Verzögerungskammern mit dem Arbeitsraum verbinden. Die eine der beiden Verzögerungskammern ist außerdem über den äußeren, zwischen den Schaufelrädern vorhandenen Ringspalt mit dem Arbeitsraum verbunden.

Die Erfindung geht aus von Druckschrift (5). Dort erkennt man in Figur 1 die zweite Verzögerungskammer 48. Diese bildet, wie man sieht, einen zur Welle 10 konzentrischen Ringraum.

Die umlaufende Kupplungsschale unterliegt beim Betrieb erheblichen Belastungen. Diese haben in der Praxis zu Brüchen geführt. Aus diesem Grunde hat man die Schale versteift, und zwar durch Rippen, die in Radialebenen verlaufen, und die den gesamen Ringraum in eine Vielzahl von Teilräumen unterteilen. Die Teilräume sind dabei gegen das Sekundärrad hin offen.

Pumpen dieser Art haben je nach Gestalt und Größe eine bestimmte Kennlinie des Drehmomentes über der Drehzahl. Dabei kommt es insbesondere auf das Verhalten im Anfahrbereich an.

In der Praxis haben sich unerklärliche Abweichungen von der Soll-Kennlinie ergeben, was nicht akzeptabel ist.

Der Erfindung liegt die Aufgabe zugrunde, eine hydrodynamische Kupplung gemäß dem Oberbegriff von Anspruch 1 derart zu gestalten, daß gewünschte Soll-Kennlinien genau eingehalten werden.

Diese Aufgabe wird durch die Merkmale von Anspruch 1 gelöst.

Der Erfinder hat folgendes erkannt: Die genannten Rippen der Schale haben beim Betrieb eine Pumpwirkung. Im Zwischenraum zwischen den genannten Teilräumen und dem Sekundärrad werden hierdurch unerwünschte Strömungskreisläufe erzeugt, durch die der Füllungsgrad des Arbeitsraumes beeinträchtigt werden kann.

Die erfindungsgemäße Abschirmung der Teilräume unterbindet die genannten Störungen und sorgt dafür, daß eine klar definierbare Kennlinie erzeugt wird.

Die Erfindung ist anhand der Zeichnung näher erläutert. Darin ist im einzelnen folgendes dargestellt:

Figur 1 ist ein Längsschnitt durch eine hydrodynamische Kupplung.

Figur 2 ist ein Längsschnitt durch eine andere, hydrodynamische Kupplung.

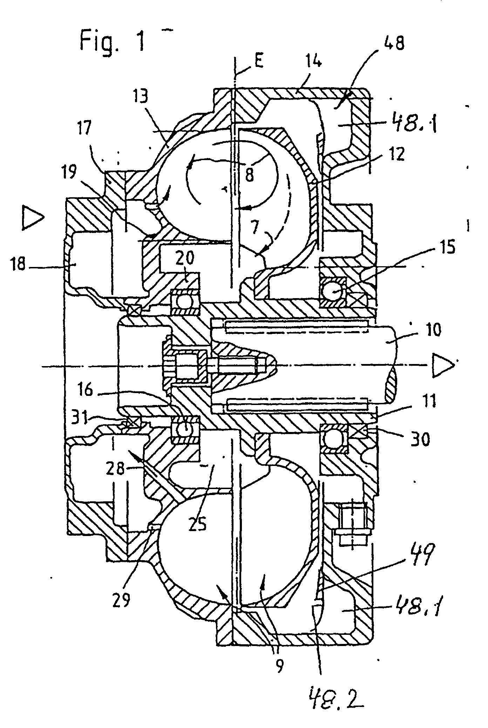

Die in Figur 1 dargestellte hydrodynamische Kupplung hat eine Abtriebswelle 10, auf der die Nabe 11 des Sekundär-Schaufelrades 12 befestigt ist. Das Primär-Schaufelrad 13 ist gemeinsam mit der daran befestigten Kupplungsschale 14 mit Hilfe von Wälzlagern 15 und 16 auf der Nabe 11 drehbar gelagert. An der Außenseite des Primär-Schaufelrades 13 ist eine Antriebsschale 17 befestigt, die eine erste Verzögerungskammer 18 begrenzt. Die Antriebsschale 17 kann mit einer nicht dargestellten Antriebswelle verbunden werden.

Das Primär-Schaufelrad 13 hat eine Radscheibe 19 mit einer daran angeformten Radnabe 20. Die Radscheibe 19 befindet sich in einem verhältnismäßig großen Abstand von der Mittelebene E und begrenzt einen schaufelfreien, radial innerhalb der Primärbeschaufelung angeordneten Stauraum 25.

Die Radscheibe 19 des Primär-Schaufelrades 13 hat in der Regel keine Öffnungen, Bohrungen oder dergleichen, so daß keine direkte Leitungsverbindung vom Stauraum 25 zur ersten Verzögerungskammer 18 besteht.

Der von den beiden Schaufelrädem 12 und 13 gebildete Arbeitsraum ist mit 9 bezeichnet. Sein radial innerer Bereich steht über Kanäle 28, die durch die Radscheibe 19 hindurchgeführt sind, mit dem radial inneren Bereich der ersten Verzögerungskammer 18 in Verbindung. Hierdurch wird erreicht, daß durch diese Kanäle 28 nur ein Übertritt von Flüssigkeit aus dem Arbeitsraum 9 in die erste Verzögerungskammer 18 stattfindet, und zwar beim Stillstand der Kupplung. Die Flüssigkeit kann dann beim Wieder-Anfahren nur über Drosselbohrungen 29 aus der ersten Verzögerunskammer 18 in den Arbeitsraum 9 zurückströmen. Damit sich der Arbeitsraum 9 beim Beginn des Anfahr-Vorganges vorübergehend entleeren kann, ist die Schale 14 derart geformt, daß sie eine äußere Ringkammer 48 bildet; diese hat die Funktion einer zweiten Verzögerungskammer und ist ständig über den von den beiden Schaufelrädern 12 und 13 gebildeten äußeren Ringspalt mit dem Arbeitsraum 9 verbunden: Dieser Ringspalt stellt im: allgemeinen einen ausreichend großen Strömungsquerschnitt für die Verbindung vom Arbeitsraum 9 zur Ringkammer 48 dar. Bei Bedarf können aber zusätzlich oder anstelle des Ringspaltes Öffnungen in wenigstens einem der Schaufelräder vorgesehen werden.

Man erkennt aus Figur 1 ferner Rippen 48.1. Im vorliegenden Falle verlaufen diese in einer Radialebene. Es wäre aber auch denkbar, die Rippen gegen die Radialebene etwas zu neigen. Die Rippen unterteilen die ringförmige Verzögerungskammer 48 in eine Mehrzahl von Teilräumen. Diese sind im Stande der Technik gegen das Sekundärrad 12 hin offen. Gemäß der Erfindung sind sie teilweise - im Bereich der Rippenkante 48.2 - gegen das Sekundärrad 12 hin abgeschirmt. Siehe das ringförmige Blech 49, das koaxial zur Welle 10 an der Schale 14 angeordnet ist.

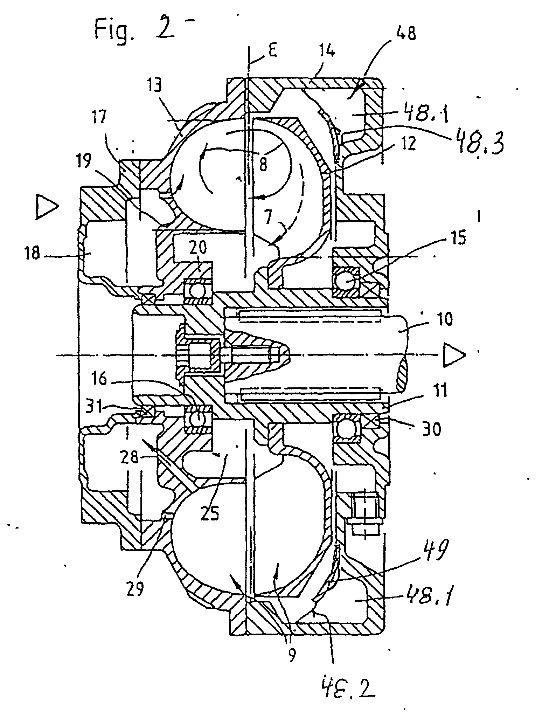

Wie dies in der Praxis aussieht, ergibt sich aus Figur 2. Man erkennt auch hier wiederum eine Rippe 48.1 mit der Rippenkante 48.2. Die Abschirmung ist hierbei mittels eines Trennbleches 49 vorgenommen. Das Trennblech 49 verläuft im wesentlichen senkrecht zu den Rippen 48.1. Es ist mit seinem radialinneren Randbereich mittels Schrauben an der Schale 14 befestigt. Die radialäußere Kante 49.1 des Trennbleches 49 reicht nicht bis zur radialäußeren Wand der Schale 14, sondern liegt auf einem etwas kleineren Radius. Hierdurch ist eine leitende Verbindung zwischen dem einzelnenTeilraum zwischen zwei Rippen 48.1 und dem Raum außerhalb des Sekundärrades 12 geschaffen.

Außerdem sind die Teilrippen 48.1 untereinander verbunden. Zu diesem Zwecke ist im vorliegenden Falle die Rippenkante 48.2 radial innen eingezogen - siehe Bezugszeichen 48.3 -, so daß zwischen diesem Bereich und dem Trennblech 49 ein sichelförmiger Spalt verbleibt. Statt des sichelförmigen Spaltes könnten auch Bohrungen in den Rippen 48.1 vorgesehen sein.

Die Abschirmung muß nicht unbedingt durch ein Trennblech 49 in Gestalt eines einzigen, umlaufenden Ringes vorgenommen werden. Es ist auch denkbar, daß einzelne Ringsegmente verwendet werden. In einem solchen Falle reicht es aus, wenn nur einzelne Teilräume abgeschirmt werden und andere nicht, beispielsweise jeder zweite Teilraum, oder jeder dritte.

## Patentansprüche

1. Hydrodynamische Kupplung mit den folgenden Merkmalen:
1.1 ein beschaufeltes Primärrad (13) und ein beschaufeltes Sekundärrad (12) begrenzen einen mit Arbeitsflüssigkeit füllbaren, torusförmigen Arbeitsraum (9);
1.2 mit dem Primärrad (13) rotiert eine Kupplungsschale (14), welche die Außenseite des Sekundärrades (12) umhüllt;
1.3 mit dem Primärrad (13) rotieren eine erste Verzögerungskammer (18) und eine zweite Verzögerungskammer (48), die beide mit dem Arbeitsraum (9) kommunizieren;
1.4 wenigstens ein, ungefähr im radial mittleren Bereich des Arbeitsraumes (9) angeordneter Überströmkanal (29) verbindet die erste Verzögerungskammer (18) mit dem Arbeitsraum (9);
1.5 die zweite Verzögerungskammer ist in Umfangsrichtung durch mehrere Rippen (48.1) in mehrere Teilräume unterteilt; **gekennzeichnet durch** die folgenden Merkmale:
1.6 es sind Trennwände (49) vorgesehen, die wenigstens einige der Teilräume wenigstens teilweise oder weitgehend abdecken.

2. Hydrodynamische Kupplung nach Anspruch 1, **dadurch gekennzeichnet, daß** eine einzige Trennwand (49) vorgesehen ist, die als geschlossener, zur Kupplungsachse konzentrischer Ring ausgebildet ist.

3. Hydrodynamische Kupplung nach Anspruch 1 oder 2, **dadurch gekennzeichnet, daß** die Trennwände (49) an der Kupplungsschale (14) festgeschraubt sind.

4. Hydrodynamische Kupplung nach einem der Ansprüche 1 bis 3, **dadurch gekennzeichnet, daß** zwischen dem einzelnen Teilraum und dem benachbarten, durch das Sekundärrad (12) begrenzten Raum eine leitende Verbindung vorgesehen ist.

5. Hydrodynamische Kupplung nach einem der Ansprüche 1 bis 4, **dadurch gekennzeichnet, daß** einander benachbarte Teilräume in leitender Verbindung miteinander stehen.

6. Hydrodynamische Kupplung nach Anspruch 5, **dadurch gekennzeichnet, daß** die Rippen (48.1) mit Öffnungen versehen sind.

7. Hydrodynamische Kupplung nach einem der Ansprüche 1 bis 6, **dadurch gekennzeichnet, daß** die Trennwände 49 und die Schale (14) aus einem einzigen Teil bestehen.

## Claims

1. Hyrodynamic coupling with the following features:
1.1 a primary wheel (13) bladed and a secondary wheel (12) bladed limit a toric work space (9) which can be filled with working fluid;
1.2 a coupling box (14) surrounding the outer side of the secondary wheel (12) rotates with the primary wheel (13);
1.3 a first delay chamber (18) and a second delay chamber (48) both communicating with the work space (9) rotate with the primary wheel (13);
1.4 at least one overflow duct (29) arranged approximately in the radially central region of the work space (9) connects the first delay chamber (18) to the work space (9);
1.5 the second delay chamber is divided in the peripheral direction into a plurality of divisional chambers by a plurality of ribs (48.1), **characterised by** the following features:
1.6 partition walls covering at least some of the divisional chambers at least partially or extensively are provided.

2. Hydrodynamic coupling according to claim 1, **characterised in that** a single partition (49) designed as a closed ring concentric to the coupling axis is provided.

3. Hydrodynamic coupling according to claim 1 or 2, **characterised in that** the partitions (49) are tightly screwed to the coupling box (14).

4. Hydrodynamic coupling according to any of claims 1 to 3, **characterised in that** a conductive connection is provided between the individual compartment and the adjacent chamber delimited by the secondary wheel (12).

5. Hydrodynamic coupling according to any of claims 1 to 4, **characterised in that** adjacent compartments are conductively connected to one another.

6. Hydrodynamic coupling according to claim 5, **characterised in that** the ribs (48.1) are provided with apertures.

7. Hydrodynamic coupling according to any of claims 1 to 6, **characterised in that** the partition walls (49) and the shell (14) consist of a single part.

## Revendications

1. Coupleur hydrodynamique ayant les caractéristiques suivantes :
1.1 un rotor primaire à aubes (13) et un rotor secondaire à aubes (12) délimitant une chambre de travail (9), de forme toroïdale, qui peut se remplir de liquide de travail,
1.2 un couvercle de coupleur (14) tourne avec le rotor primaire (13), ce couvercle entourant le côté extérieur du rotor secondaire (12),
1.3 une première chambre de temporisation (18) et une seconde chambre de temporisation (48) tournent avec le rotor primaire (13), les deux chambres communiquant avec la chambre de travail (9),
1.4 au moins un canal de passage (29) prévu sensiblement dans la zone radiale médiane de la chambre de travail (9) relie la première chambre de temporisation (18) à la chambre de travail (9),
1.5 la seconde chambre de temporisation est subdivisée dans la direction périphérique par plusieurs nervures (48.1) en plusieurs chambres partielles,
**caractérisé par**
1.6 des cloisons (49) qui couvrent partiellement ou en grande partie au moins certaines des chambres partielles.

2. Coupleur hydrodynamique selon la revendication 1,
**caractérisé par**
une unique cloison (49) réalisée sous la forme d'un anneau fermé concentrique à l'axe du coupleur.

3. Coupleur hydrodynamique selon les revendications 1 ou 2,
**caractérisé en ce que**
les cloisons (49) sont vissées sur le couvercle (14) du coupleur.

4. Coupleur hydrodynamique selon l'une quelconque des revendications 1 à 3,
**caractérisé par**
une communication entre chaque chambre partielle, séparée, et le volume voisin délimité par le rotor secondaire (12).

5. Coupleur hydrodynamique selon les revendications 1 ou 4,
**caractérisé en ce que**
les chambres partielles, voisines les unes des autres, communiquent entre elles.

6. Coupleur hydrodynamique selon la revendication 5,
**caractérisé en ce que**
les nervures (48.1) comportent des orifices.

7. Coupleur hydrodynamique selon l'une quelconque des revendications 1 à 6,
**caractérisé en ce que**
les cloisons (49) et le couvercle (14) sont réunis en une seule pièce.
